# EUROPEAN PATENT APPLICATION

(11) **EP 2 246 318 A1**
(43) Date of publication of application: **03.11.2010**
(21) Application number: 09712825.0
(22) Date of filing: 16.02.2009
(51) Int. Cl.: C04B 38/08, B01J 20/12, B01D 53/02, A01N 25/00, C05D 3/02, C02F 1/28, A01K 1/015

(54) **COMPOSITION OF A MATERIAL HAVING A POROUS STRUCTURE, PREPARATION METHODS AND CORRESPONDING USES**

(30) Priority: 19.02.2008 ES 200800448
(71) Applicant: Bionatur Biotechnologies S.L., 08019 Barcelona (ES)
(72) Inventor: COSTAS CASELLAS, Pere, E-08019 Barcelona (ES); BLANCO ÁLVAREZ, Jesús, E-28043 Madrid (ES); MIRÓ ESPINÓS, José, E-08015 Barcelona (ES)
(74) Representative: Curell Aguilà, Marcelino
(86) International application number: PCT/ES2009/000089
(87) International publication number: WO 2009/103831

(57) **Abstract**

The present invention relates to new materials and the preparation thereof, with a porous structure comprising calcium carbonate and magnesium carbonate of mineral origin or from algae or pieces of mollusc shells, formed mainly by said salt together with clays of the bentonite, α-sepiolite and aluminium silicate type. It also relates to their industrial use in the removal of acid gases and vapours in fixed and mobile beds and to their use as agricultural fertilizers and for water treatment such as mineralization, etc. These materials are shaped like hollow cylinders of the smooth or ribbed, straight, curved, regular or irregular cut macaroni type and have a noticeable textural development in the form of structures of parallel channels along the longitudinal axis in a number greater than 2 and less than 100 channels per square centimetre cross section generally known as monolith or honeycomb.

## Description

### TECHNICAL SECTOR

The invention relates to new materials with a porous structure and their use in removing acid gases and vapours, in agriculture as ground fertilizers, in the treatment of water, in temporary floor coverings for animal farms and in the treatment of air for removing bacteria, micro-organisms, dust and bad smells.

### STATE OF THE ART

The removal of undesirable compounds that exist in industrial effluents and in combustion gases, has been the object of several technological studies and developments with the aim of avoiding their emission into the environment.

Sulphurous anhydride and nitrogen oxides, which are the compounds, together with ammonia, that most contribute to the formation of acid rain, are mainly produced in the units that incinerate fossil fuels or the derivatives thereof.

Within the technologies developed for the removal of acid gases and vapours, such as for example sulphurous anhydride, the treatment with aqueous suspensions of carbonates, hydroxides and oxide of alkaline and alkalinoterrous elements or the mixtures thereof is the process used in most facilities, specially in desulphuring facilities. In these processes, the SO₂ is absorbed in the water and the acid formed must be neutralized to allow the absorption of SO₂ to continue. The speed at which this neutralization occurs conditions the speed with which the SO₂ is absorbed in the liquor.

In its most generalized form, this process uses calcium carbonate. The reduced solubility of this compound limits the concentration of calcium cations in the water and therefore the neutralization speed of the SO₂ absorbed; consequently this reaction is the controlling step of the overall process. In these wet processes, it is necessary to use high proportions of liquid/solid, long contact times and the possible addition of additives to maintain the system pH.

In spite of its widely spread usage, this wet technology has some significant technological problems. The undesirable deposit of solids on the walls of the tanks or pipes and the frequent blockages in the nozzles and conduits are particularly severe; both undesirable phenomena are caused by the oxidation of calcium sulphite to calcium sulphate (plaster) due to the action of the oxygen present in the gases to be treated. Furthermore, these systems can require large sleeve filter facilities, which imply high initial costs, and high maintenance costs (periodical sleeve change at short intervals, periodical interruption of the whole productive process to clean the sleeves, etc..) and at the same time due to the corrosion effect, it is necessary to change the whole facility every 4-6 years. Also the construction materials of these units are exposed to the effects of corrosion, erosion and abrasion phenomena, particularly in areas of contact with the suspensions, sludge or slip used in the process.

Other additional difficulties are the management and treatment of the excess sludge, water and air from the process, which must fulfil current dumping regulations in each country.

In order to overcome these difficulties numerous methods have been proposed. Thus, for example, the aqueous suspensions of solid compounds can be replaced with a solution of ammonium sulphate, where the sulphite and ammonium bisulphite formed oxidise into sulphate and ammonium bisulphate which, by means of treatment with ammonia, is converted into ammonium sulphate in two reaction steps. Also copper or iron compounds can be used to inhibit the oxidation of sulphite to sulphate. Most of the proposals improve aspects of the process, although, in many cases, the complexity of the system and the difficulty in operating it are increased.

Furthermore, certain clays are known that have plastic properties, in other words that, when sufficiently wet, they are deformable when a slight pressure is applied maintaining the shape and that they become rigid during drying and vitreous when subjected to high temperatures. In general they are natural phylosillicates made up of small particles or crystals, generally of a colloidal size, that give rise to materials with great superficial development and a capacity for both physical adsorption, and chemical interaction.

Most of the plastic clays can include other materials in powder form as a filler. Thus, for example, mixtures of calcium montmorillonite with activated carbon are known for the removal of benzopyrene that is present as an impurity in combustible oils. Also a smectite is known that contains activated carbon in its texture, formed by carbonizing previously absorbed oil, and the inclusion of titanium dioxide has been described in the structure of the bentonite as a possible support for the catalysts.

### DESCRIPTION OF THE INVENTION

The aim of the invention is a composition of a material with a porous structure **characterized in that** it comprises a silicate from the group made up of α-sepiolite, aluminium silicate, enstatite, bentonite and the mixtures thereof, and a compound from the group made up of carbonates, hydroxides or oxides of alkaline or alkalinoterrous elements and the mixtures thereof. In fact, the new porous materials of this invention have very good textural properties that allows applying them to various uses. Thus, the aim of the invention is also new uses of these compositions, such as for example:
- as an absorbent and adsorbent material at a dynamic rate of acid gases and vapours, in fixed and mobile beds, allowing the design and operation of very effective, low cost units of absorption/adsorption at a dynamic rate,
- as a ground fertilizing material,
- for the treatment, neutralization and mineralization of water, lowering its CO₂ content and supplying the necessary carbonate and bicarbonate ions,
- as an absorbent material for the treatment of air capturing and removing bacteria, micro-organisms, environmental dust, bad smells and/or dust mites,
- as a temporary floor covering on animal farms, preferably poultry farms.

These new uses are particularly effective when the compound from the group made up of carbonates, hydroxides or oxides of alkaline or alkalinoterrous elements and the mixtures thereof, is calcium carbonate or, in the particular case of the use for the treatment, neutralization and mineralization of water, when it is a mixture of calcium carbonate and magnesium carbonate.

The carbonates, hydroxides and oxides of alkaline or alkalinoterrous elements or the mixtures thereof can have a mineral origin, or alternatively they can have an organic origin, preferably from calcareous algae and/or mollusc shells. Also it is possible to mix both origins.

Preferably the composition is shaped like mass cylinders or hollow cylinders, and very preferably like hollow cylinders. In this latter case, it is particularly advantageous that the hollow cylinders be selected from among smooth regular or irregular cut cylinders, ribbed regular or irregular cut cylinders, straight regular or irregular cut cylinders and curved regular or irregular cut cylinders. The hollow cylinders, which resemble pieces of macaroni, can have a length of approximately 0.5 cm to approximately 10 cm, and the wall thickness can be between approximately 0.04 cm and approximately 0.5 cm.

Another advantageous alternative is when the composition is shaped like a structure of parallel channels along the longitudinal axis in a number greater than 2 and less than 100 channels per square centimetre cross section, generally called monolith or honeycomb.

Preferably the compound is calcium carbonate, and the composition has a silicate content of 10-30% by weight, or the derivatives that are obtained by treating these shaped materials at temperatures equal or higher than 650°C and equal or lower than 900°C for at least 2 h in air. Advantageously it comprises between 70% and 90% by weight of calcium carbonate or the derivatives that are obtained by treating these materials at temperatures higher than 650°C and lower than 900°C for at least 2 h in air. In fact, carrying out a thermal treatment on the shaped dry material at temperatures lower than 500°C leads to pieces that are too sensitive to abrasion and to the spalling of the physical structure due to the effect of water. However, when the shaped dry material is treated at temperatures between 500°C and 700°C a loss of water or groups of silicate hydroxyl occurs which dehydrates irreversibly, and part of the carbonates turn into oxides with a release of CO₂. At temperatures of 750°C-800°C all the carbonates decompose. The thermally shaped and stabilized pieces have a high content of new large diameter pores, produced mainly by the interparticle hollows or spaces that are caused during the kneading, shaping and drying of these materials. In other words, in these new absorbent compounds the two raw materials not only provide textural properties, but also a macroporosity of interparticle origin is formed that increases the external surface area and therefore enhances the matter transfer phenomena in the interphase (very important aspect in absorption units at a dynamic rate). For example, in the case of a material prepared with bentonite and calcareous algae or pieces of mollusc shells with a bentonite content of 10% and treated at 500°C for 4 hours in air, it has a specific surface of 7 m²·g⁻¹ with a total pore volume of 0.28 ml·g⁻¹. In addition, with thermal treatments at high temperatures there is a greater content of macropores, produced additionally by the hollows or spaces that are caused by the release of carbon anhydride. Consequently an increase is observed in the value of the total pore volume with the treatment temperature and time. As an example, for an initial calcium carbonate/bentonite composition of 80:20, the parts treated at 600°C/2h have a total pore volume of 0.27 ml-g⁻¹, for 700°C/2h the value increases to 0.76 ml-g⁻¹ and for 800°C/2h it passes to 0.79 ml-g⁻¹.

Advantageously the composition comprises up to 15% by weight of magnesium carbonate.

Preferably the silicate is α-sepiolite, aluminium silicate, enstatite of the mixtures thereof. The α-sepiolite is a hydrated magnesium silicate, having the structural formula Si₁₂Mg₈O₃₀(OH)₄(OH2)₄ ·8H₂O. The zeolithic channels open to the surface of the α-sepiolite create a network of pores of different sizes and dimensions and give a specific surface greater than 200 m²g⁻¹. The hygroscopic character of this material is due to its high number of silanol groups and water molecules coordinated with the magnesium. Also noteworthy for this application is the exchange facility of the magnesium ions with the water protons. The disaggregated particles of this dry material have a size of 90% less than 0.3 microns; the texture has a total pore volume of 0.35-0.40 cm³g ⁻¹ with a very significant development of the mesoporosity (pores with a diameter of between 8 and 50 nm), with low microporosity values (pores with a diameter of between 0-2 nm) which is estimated in values around 0.02 cm³g ⁻¹. In addition, when carrying out a thermal treatment at temperatures between 830°C and 900°C, for a period no less than 2 hours, the α-sepiolite transforms and a new crystalline phase of magnesium silicate called enstatite appears, ASTM 11-0273, having an empirical formula of Mg₂Si₂O₆ which surprisingly significantly increases the mechanical properties of the shaped material and makes it structurally very stable to the action of water and water vapour. The formation of enstatite does not produce significant variations in the porous structure of the compound or in its absorption capacity. Thus, for example, compounds structured in the form of hollow cylinders with a length of 15 mm, an exterior diameter of 5 mm and an inner diameter of 3 mm, prepared with α-sepiolite and calcareous algae in the weight ratio of 1:2, lead to porous materials which, after being treated for 2 hours at temperatures of 800°C and 850°C, showed a breakage pressure of 0.6 kg and 1.1 kg per linear centimetre respectively. In both cases the absorption capacity was 0.14 g of SO₂ per gram of absorbent.

Advantageously the composition comprises α-sepiolite and/or aluminium silicate and calcium carbonate or the derivatives that are obtained by treating these materials at temperatures greater than 600 °C and lower than 900 °C for at least 2 h in air. It is particularly advantageous that the powder of α-sepiolite and/or aluminium silicate used in the preparation thereof has a particle size of 90% less than 0.3 micron and that the powder of calcium carbonate that is used in the preparation thereof has a particle size of 90% less than 5 microns.

An advantageous alternative is when the composition, in addition, comprises active carbon in proportions no greater than 33% by weight of the total.

Another particularly advantageous alternative is obtained when the composition comprises between 10% and 20% by weight, preferably 15% by weight, of α-sepiolite, between 70% and 90% by weight, preferably 80% by weight, of calcium carbonate, and between 2% and 8% by weight, preferably 5% by weight, of aluminium silicate or the derivatives that are obtained by treating these materials at temperatures greater than than 600°C and less than 900°C for at least 2 h in air.

Also, it is possible that the silicate is bentonite and that the compound is a carbonate of alkalinoterrous elements.

The aim of the invention is also a method for preparing a composition according to the invention. The method comprises the following stages:
a) mixing powders of the silicate from the group made up of α-sepiolite, aluminium silicate, enstatite, bentonite and the mixtures thereof, powders of the compound from the group made up of carbonates, hydroxides and oxides of alkaline and alkalinoterrous elements or the mixtures thereof, and, where appropriate, powders of activated carbon, until an even mixture of the powders is obtained,
b) kneading the even mixture of powders obtained by adding water to obtain a wet paste, for example in a high shearing force kneader,
c) shaping the wet paste in the desired shape until pieces (for example, the above-mentioned "macaroni") are obtained,
d) drying the shaped pieces in the air and at room temperature for at least 2 hours and between 80 and 270°C for at least 2 hours,
e) thermally treating the pieces at temperatures between 600°C and 1000°C, for at least 2 hours in air or in an inert atmosphere if it contains activated carbon.

When the particles of the mentioned silicates are kneaded adequately in an aqueous means (or in any other polar solvent) a pseudoplastic mass is produced that very easily incorporates the particles of the compound (for example, the carbonate). For example, in the case of the α-sepiolite, its leaf shape particles are normally found forming bundles. When these particles are kneaded adequately in an aqueous means (or in any other polar solvent) the space between the bundles expands, housing inside it molecules of the solvent, mainly due to hydrogen links between the superficial silanol groups and the solvent molecules. When particles of the compound (for example, of the carbonate) are, also, present during the kneading, this pseudoplastic mass incorporates them very easily, producing the close-knit mixture of both compounds. The mass obtained after kneading can be moulded or drawn to obtain the desired shape and subsequently it is dried and treated thermally. When the wet mass obtained with these materials is shaped in hollow cylinder structures with adequate dimensions, porous materials can be obtained with adsorbent properties and high performance characteristics for fluid cleaning operations at a dynamic rate or for incorporating them into the ground as a fertilizer or enhancer of conventional fertilizers or as a material for treating, neutralizing and mineralizing water.

As already mentioned above, these hollow cylinders can be of the smooth, ribbed, straight, curved, regular or irregular cut macaroni type, in any shape and size. In their application for removing acid gases and vapours, the passage of the fluid to be cleaned through the adsorbent material arranged in this geometric shape, leads to a fluid dynamics that combines a turbulent rate caused by the flow that passes between the cylinders with a laminar rate that occurs when the fluid passes through the inside of the hollow cylinders. This situation leads to particular behaviour that significantly improves the efficiency of the adsorption phenomenon if compared with the units shaped like honeycomb where the fluid passes therethrough at a laminar rate. When applied as fertilizer the material offers greater surface contact per unit of volume than the systems containing pellets or solid materials and their macroporous structure facilitates the adequate space for the enhanced development of the desirable biological processes.

Preferably, in the method according to the invention, the silicate is α-sepiolite and/or aluminium silicate and the compound is calcium carbonate of mineral origin, where stage d) is carried out at temperatures between 80°C and 180°C, and stage e) is carried out at temperatures between 650°C and 900°C, preferably between 800°C and 900°C.

Alternatively, in the method according to the invention, the silicate is α-sepiolite and/or aluminium silicate and the compound is of organic origin, preferably of calcareous algae and/or mollusc shells, where stage e) is carried out at temperatures between 650°C and 900°C, preferably between 800°C and 900°C.

In the case of including activated carbon, preferably in stage a) the α-sepiolite, the compound and the activated carbon are mixed in a weight ratio between 1:2:0 and 1:1:1. In fact, in certain cases, if part of the alkaline or alkalinoterrous compound is replaced with activated carbon, a slight increase in absorption is produced, possibly due to the catalytic effect of the activated carbon which allows the oxidation of SO₂ into SO₃ in the presence of oxygen and water.

Advantageously, in stage a) α-sepiolite and calcareous algae are mixed in a weight ratio between 1:1 and 1:5.

This invention also relates to the use of a composition made as described above, as an adsorbent/reactant material for removing acid gases and vapours at a dynamic rate. When gases polluted, for example, with sulphur dioxides, hydrochloric acid or hydrofluoric acid or the mixtures thereof are made to pass through this material, preferably in the shape of a hollow cylinder, the reaction occurs between these acid gases and the alkaline or alkalinoterrous compound (preferably the calcium oxide) that it contains, forming with extraordinary efficiency the sulphite, sulphate, chlorides and fluorides (for example from calcium) which remain deposited filling-in the pores of the material. This allows the treatment of large volumes of gases with minimum head loss, for example by using mobile bed absorption units. These new absorption units do not have problems of undesirable deposits or blockages, and they are not significantly affected by the phenomena of corrosion, erosion and abrasion that are so frequent in conventional units. The saturated material can be replaced easily, without problems of corrosion, deposits or sludge treatment.

This invention also relates to the use of a composition made as described above, as a fertilizing and improvement material for acid or sandy ground, providing the numerous nutrients present in calcareous algae, which is used preferably instead of using mineral origin carbonates, and offering a hollow shape cylinder with macroporous walls that enhances in an extraordinary way the biological phenomena that intervene in the growth of plants.

In another application, the cylinders thus prepared are used as beds (temporary floor covering) on animal farms, preferably poultry farms, improving the salubrity of the facilities, enhancing the fattening of the animals and increasing the quality of the product.

Also these materials can be used as neutralizing or remineralizing agents for the treatment of water, lowering their CO₂ content and supplying the necessary carbonate, bicarbonate and magnesium ions, in which case in stage e) they are treated preferably at temperatures between 500°C and 600°C for at least 2 hours.

In another application, the great porosity and the large specific surface of this material, affords it a use as a filter for treating air capturing all kinds of bacteria, micro-organisms, environmental dust, bad smells, dust mites, organic compounds and heavy metals, etc., which are removed in the same filter increasing the temperature to 115-300°C for a few seconds.

The mollusc shells can be supplied, for example, by C-Weed in Saint Malo (France). The aluminium silicate can be supplied by Imerys, in Paris (France).

### EMBODIMENTS OF THE INVENTION

This invention is illustrated additionally by the following examples, which do not intend to limit the scope thereof.

### Example 1

Calcareous algae supplied by Algarea Minaraliçao Industria e Comercio Ltda. (Brazil) was used as a raw material, corresponding predominantly to the Lithothamnium SP species. The average value of its weight composition was 90.9% of calcium carbonate, 3% of magnesium as Mg and 0.75% of silica as SiO₂. The rest corresponded to compounds with more than 20 elements present in small amounts. A total of 90% of the disaggregated particles of this dry material had a size smaller than 5.2 µm. The porous texture of this material had a specific average surface of 6 m²·g ⁻¹ with a textural development centred on the macroporosity (pores with a diameter of 50-10.000 nm) and the absence of micropores. When the calcareous algae were treated at temperatures of 600°C or higher, CO₂ was released with the formation of the corresponding calcium and magnesium oxides and the specific surface of the material reduced to 2.6 m²g ⁻¹. The α-sepiolite was supplied by Tolsa, S.A., also in powder form.

After drying at 150°C for 24 hours, the α-sepiolite had a specific surface of 217 m²g ⁻¹ with an external surface of 121 m²g ⁻¹ and the calcareous algae had a specific surface of 5.9 m²g⁻¹ and an external surface of 5.6 m²g ⁻¹.

250 g of dry α-sepiolite with a disaggregated particle size of 90% <0.3 µm were mixed with 750 g of dry calcareous algae with a disaggregated particle size of 90% < 5 µm. Once an even mixture was obtained, it was taken to a double sigma kneader and the kneading started slowly adding deionized water; and once the addition of water was complete, the kneading was maintained for 4 hours. The thus obtained mass was shaped by means of an die to obtain hollow cylinders that were 10 mm long, with an external diameter of 4.5 mm and an internal diameter of 2.5 mm. The shaped pieces, were dried in the air and at room temperature for 24 hours and subsequently they were treated at 150°C for 3 hours in an air atmosphere and at 800°C for 2 hours in an air atmosphere.

The thus obtained hollow cylinders had a specific surface of 9 m²g ⁻¹, with an external surface of 8 m²g ⁻¹ , an imperceptible micropore volume, a mesopore volume of 0.03 cm³g ⁻¹ and a macropore volume of 0.52 cm³g^{-1.} The mechanical properties of the cylinders obtained permitted their industrial use and their structure was perfectly stable in the presence of water or water vapour.

### Example 2

The material prepared in the previous example was assayed to determine its absorption capacity at a dynamic rate. The assays were carried out at temperatures of 20-24°C and at a pressure close to atmospheric pressure. The air to be treated contained 4% molar of water and 650 ppm of SO₂. It operated at at spatial speed of 2014 h⁻¹ and a linear passage speed of the gases through the bed of 0.8 Nm·s⁻¹. The absorption of SO₂ measured up to a concentration of 25 ppm at the exit was 0.21 g of SO₂ per absorbent gram.

After the tests the weight of the macaroni increased by 40-50% and its resistance to compression increased 100%.

### Example 3

Following the method set out in Example 1 cylinders are prepared using the same raw materials with the addition of Fluesorb B activated carbon obtained by activating with vapour and supplied by Chemviron, which has a specific surface of 1.093m²g⁻¹, a micropore volume of 0,42 cm³g ⁻¹, a mesopore volume of 0.22 cm³g ⁻¹ and a disaggregated particle size of 90% < 12.3µm. To this end, 250 g of α-sepiolite, 500 g of calcareous algae and 250 g of activated carbon were mixed. Once an even mixture was obtained the method set out in Example 1 was followed.

The material obtained was assayed under the conditions indicated in Example 2, resulting in an absorption capacity of 0.22 g of SO₂ per absorbent gram.

### Example 4

Calcium carbonate Socal P2V supplied by Solvay with a purity of 98,8% and an average particle size y of 1.5 µm and a specific surface of 7 m² ·g ⁻¹, and bentonite supplied by Tolsa, S.A. (Spain) called Atox, with a specific BET surface of 130 m² ·g ⁻¹ and a particle size of 75% less than 45 µm, were used as raw materials, both materials in powder form.

400 g of bentonite and 1600 g of calcium carbonate were mixed. Once an even mixture was obtained, it was taken to a kneader and the kneading started slowly adding water; and once the addition of water was complete, the kneading was maintained for 4 hours. The thus obtained mass was shaped using a die to obtain hollow cylinders that were 10-15 mm long, with an external diameter of 6 mm and an internal diameter of 3 mm. The shaped pieces were dried in the air at room temperature for 24 hours and subsequently they were treated at 150°C for 24 hours in an air atmosphere, and afterwards the temperature was increased to 850°C, and said temperature was maintained for 4 hours in an air atmosphere.

The thus obtained hollow cylinders had a specific surface of 8-12 m²·g⁻¹ (whole external surface) without micropores, but with a mesopore volume of 0.03 cm³ ·g⁻¹ and a macropore volume of 0.77 cm³ ·g⁻¹. The pore system is formed by the inter particle spaces, and they have a pore size of about 300-400 nm. The material has a mechanical strength of 0.85 kg/cm. After the treatment, the resulting sintered material can be used, in its shaped state, as a reactive element that offers various advantages such as for example it is easy to handle, it has a smaller head loss than other compounds, a large specific surface for maximum contact with the gases and fluids to be treated, great capacity as a reagent etc.. Therefore, this system will be ideal for use in industrial processes for removing pollutants, by including it in fixed beds.

### Example 5

The material prepared in Example 4 above was assayed to determine its adsorption capacity at a dynamic rate. The assays were carried out at temperatures of 30°C and at a pressure close to atmospheric pressure. The air to be treated contained 3% molar of water and 700 ppm of SO₂. It operated at a spatial speed of 2000 h⁻¹ (C.N.) and at a linear passage speed of the gases through the bed, of 0.18 Nm·s⁻¹, the adsorption of SO₂ was measured up to a concentration at the exit of 70 ppm.

After the absorption assay, the material used increased its weight by 42% and its compression resistance increased from 0.85 to 1.0 kg ·cm⁻¹. This means that both the speed and the SO2 absorption capacity are very high.

### Example 6

Following the method set out in Example 4 hollow cylinders, ribbed and 10 mm long, with an external diameter of 5 mm and an internal diameter of 3 mm were prepared, using bentonite (Atox, Tolsa), and calcareous algae supplied by Algarea Minaraliçao Industria e Comercio Ltda. (Brazil) as raw materials. The bentonite/algae weight ratio was 20:80. In this example the thermal treatment of the hollow shaped, dry cylinders was carried out at 500°C for 4 hours in an air atmosphere.

The product obtained had a BET surface of 15 m²·g ⁻¹ and a total pore volume of 0.20 cm³·g ⁻¹ of which 0.15 cm³·g ⁻¹ corresponded to the volume taken up by the macropores. The fill-in density of the product was 0.58 g·cm⁻³ and its water adsorption capacity was 0.18 g of water per product gram.

### Example 7

A first product was prepared according to the description in Example 6, which implies a thermal treatment at the temperature of 500°C for 4 hours in air. Also, a second product was prepared, similar to the one in Example 6, although the thermal treatment was carried out at 400°C for 4 hours. Finally a third product was prepared with treatment at 300°C for 4 hours. The products were mixed in the ratio of 1:1:1 by weight to be used as fertilizer in a soya plantation in the proportion of 300-350 kg/ha obtaining an average productivity, measured in Tn/ha, greater than 10% by weight with respect to the plantation area used as a control.

The classification of sizes -micro, meso and macro- used in this document is that used by the IUPAC "Manual of Symbols and Terminology of Physicochemical Quantities and Units" E. Butterworths, London (1972). The values of the pore volumes and specific surfaces of the materials are determined by adding mercury and by the adsorption of nitrogen following the BET method.

### Example 8

Calcium carbonate (Q300), α-sepiolite (120 NF, Tolsa), and aluminium silicate (Hy-mod Exselcior) were used as raw materials, with all the materials in powder form.

3 kg of α-sepiolite, 1 kg of aluminium silicate and 16 kg of calcium carbonate were mixed. Once an even mixture was obtained, it was taken to a kneader and the kneading started slowly adding water; once the addition of water was complete, the kneading was maintained for 4 hours. The thus obtained mass was shaped using an industrial die to obtain hollow cylinders that were 10-15 mm long, with an external diameter of 6 mm and an internal diameter of 3 mm. The shaped pieces, were air dried at room temperature for 24 hours and subsequently the temperature rose to 850°C, and this temperature was maintained for 4 hours in an air atmosphere.

This way hollow cylinders were obtained that had a specific surface of 11 m²·g⁻¹ (whole external surface) without micropores, but with a mesopore volume of 0.019 cm³·g⁻¹ and with a macropore volume of 0.538 cm³·g⁻¹. The pore system was formed by the inter particle spaces, and has a pore size of about 250-350 nm. The material has a linear mechanical strength of 0.38 kg/cm, and has the same advantages as in Example 4.

### Example 9

The material prepared in Example 8 above was assayed to determine its adsorption capacity at a dynamic rate. The assays were carried out at temperatures of 150°C and at a pressure close to atmospheric pressure. The air was the air emitted by an industrial ceramic plant and contained 3% molar of water and 15-30 ppm of HF. It operated at a spatial speed of 33000 h⁻¹ (C.N.) and a linear passage speed of the gases through the bed of 3.6 Nm·s⁻¹, the adsorption of HF was measured up to a concentration of HF at the exit of approximately 5 ppm less than at the entrance.

After the adsorption assay the material used increased its weight by 31.9%, which corresponded to an stechiometric factor of 1. In other words, basically every molecule of Ca(OH)₂ had reacted with the HF. This value proves the high performance of this system in removing acid gases from industrial plants.

## Claims

1. Composition of a material with a porous structure **characterized in that** it comprises a silicate from the group made up of α-sepiolite, aluminium silicate, enstatite, bentonite and the mixtures thereof, and a compound from the group made up of carbonates, hydroxides or oxides of alkaline or alkalinoterrous elements and the mixtures thereof.

2. Composition according to claim 1, **characterized in that** the carbonates, hydroxides and oxides of alkaline and alkalinoterrous elements or the mixtures thereof have a mineral origin.

3. Composition according to claim 1, **characterized in that** the carbonates, hydroxides and oxides of alkaline and alkalinoterrous elements or the mixtures thereof have an organic origin, preferably from calcareous algae and/or mollusc shells.

4. Composition according to any of the claims 1 to 3, **characterized in that** said composition is shaped like mass or hollow cylinders, preferably like hollow cylinders.

5. Composition according to claim 4, **characterized in that** said hollow cylinders are selected between smooth regular or irregular cut cylinders, ribbed regular or irregular cut cylinders, straight regular or irregular cut cylinders and curved regular or irregular cut cylinders.

6. Composition according to any of the claims 1 to 5, **characterized in that** said composition is shaped like a structure of parallel channels along the longitudinal axis in a number greater than 2 and less than 100 channels per square centimetre cross-section.

7. Composition according to any of the claims 1 a 6, **characterized in that** the compound is calcium carbonate, and **in that** it has a content of said silicate between 10-30% by weight or the derivatives that are obtained by treating these shaped materials at temperatures equal or greater than 650°C and equal or lower than 900°C for at least 2 h in air.

8. Composition according to claim 7, **characterized in that** it comprises between 70% and 90% by weight of calcium carbonate or the derivatives that are obtained by treating these materials at temperatures greater than 650°C and lower than 900°C for at least 2 h in air.

9. Composition according to any of the claims 1 to 8, **characterized in that** it comprises up to 15% by weight of magnesium carbonate.

10. Composition according to any of the claims 1 to 9, **characterized in that** said silicate is α-sepiolite, aluminium silicate, enstatite or the mixtures thereof.

11. Composition according to claim 11 **characterized in that** it comprises α-sepiolite and/or aluminium silicate and calcium carbonate or the derivatives that are obtained by treating these materials at temperatures greater than 600 °C and lower than 900 °C for at least 2 h in air.

12. Composition according to claim 11, **characterized in that** the powder of α-sepiolite and/or aluminium silicate used in the preparation thereof has a particle size of 90% less than 0.3 microns and the powder of calcium carbonate used in the preparation thereof has a particle size of 90% less than 5 microns.

13. Composition according to one of the claims 11 or 12, **characterized in that**, in addition, it comprises active carbon in proportions no greater than 33% by weight of the total.

14. Composition according to any of the claims 11 to 13, **characterized in that** it comprises between 10% and 20% by weight, preferably 15% by weight, of α-sepiolite, between 70% and 90% by weight, preferably 80% by weight, of calcium carbonate, and between 2% and 8% by weight, preferably 5% by weight, of aluminium silicate or the derivatives that are obtained by treating these materials at temperatures greater than 600°C and lower than 900°C for at least 2 h in air.

15. Composition according to any of the claims 1 to 9, **characterized in that** said silicate is bentonite and said compound is a carbonate of alkalinoterrous elements.

16. Method for preparing a composition according to any of the claims 1 to 15, **characterized in that** it comprises the following stages:
a) mixing powders of the silicate from the group made up of α-sepiolite, aluminium silicate, enstatite, bentonite and the mixtures thereof, powders of the compound from the group made up of carbonates, hydroxides and oxides of alkaline and alkalinoterrous elements or the mixtures thereof, and, where appropriate, powders of activated carbon, until an even mixture of the powders is obtained,
b) kneading the even mixture of powders obtained by adding water to obtain a wet paste, for example in a high shearing force kneader,
c) shaping the wet paste in the desired shape until pieces (for example, the above-mentioned "macaroni") are obtained,
d) drying the shaped pieces in the air and at room temperature for at least 2 hours and between 80 and 270°C for at least 2 hours,
e) thermally treating the pieces at temperatures between 600°C and 1000°C, for at least 2 hours in air or in an inert atmosphere if it contains activated carbon.

17. Method according to claim 16, **characterized in that** said silicate is α-sepiolite and/or aluminium silicate and said compound is calcium carbonate of mineral origin, where said stage d) is carried out at temperatures between 80°C and 180°C, and said stage e) is carried out at temperatures between 650°C and 900^{a}C, preferably between 800°C and 900°C.

18. Method according to claim 16, **characterized in that** silicate is α-sepiolite and/or aluminium silicate and said compound is of organic origin, preferably from calcareous algae and/or mollusc shells, where said stage e) is carried out at temperatures between 650°C and 900^{a}C, preferably between 800°C and 900°C.

19. Method according to any of the claims 16 to 18, **characterized in that** in stage a) said α-sepiolite, said compound and said activated carbon are mixed in a weight ratio of between 1:2:0 and 1:1:1.

20. Method according to claim 18, **characterized in that** in stage a) α-sepiolite and calcareous algae are mixed in a weight ratio between 1:1 and 1:

21. Use of a composition according to any of the claims 1 to 15, where said compound is calcium carbonate, as absorbent and adsorbent material at a dynamic rate of acid gases and vapours.

22. Use of a composition according to any of the claims 1 a 15, where said compound is calcium carbonate, as ground fertilizing material.

23. Use of a composition according to any of the claims 1 to 15, where said compound is a mixture of calcium carbonate and magnesium carbonate, for the treatment, neutralization and mineralization of water.

24. Use of a composition according to any of the claims 1 to 15, where said compound is calcium carbonate, as adsorbent material for the treatment of air capturing bacteria, micro-organisms, environmental dust, bad smells and/or dust mites.

25. Use of a composition according to any of the claims 1 to 15, where said compound is calcium carbonate, as temporary floor covering in animal farms, preferably poultry farms.
